# EUROPEAN PATENT APPLICATION

(11) **EP 4 813 256 A1**
(43) Date of publication of application: **30.09.2026**
(21) Application number: 25166012.2
(22) Date of filing: 25.03.2025
(51) Int. Cl.: A47G 19/02, A47G 19/12, A47G 19/14, A47G 19/22, C08L 67/04, C08K 3/34, A47G 21/00, C08G 63/06, C08K 3/22, C08K 3/26

(54) **BIODEGRADABLE TABLEWARE ITEM AND METHOD FOR ITS PRODUCTION**

(71) Applicant: SN Portugal, Lda., 2765-399 Estoril (PT)
(72) Inventor: Hellmeister, Alexandre, 2765-399 Estoril (PT)
(74) Representative: Pereira Garcia, João Luís

(57) **Abstract**

The present invention relates to a biodegradable tableware item made from a mixture comprising 55% to 100% *(w*/*w)* of a polyhydroxyalkanoate and 0% to 45% *(w*/*w)* of a reinforcing agent and further comprising at least one textured area on the surface of said tableware item, along with the respective method of production.

## Description

### Technical Field

The present invention relates to the field of polymeric materials, specifically to a moulded tableware item made of polyhydroxyalkanoate (PHA) and the method for its production.

### Prior Art

Waste generated by traditional tableware is one of the greatest environmental challenges. Conventional plastics take more than 1,000 years to degrade, fragmenting into microplastics that contaminate soil, water, and wildlife.

Glass and ceramics, on the other hand, are virtually indestructible in the environment, with an indeterminate biodegradation period, and their fragmentation into smaller pieces does not solve the problem.

The production of traditional tableware, such as ceramics and glass, requires large amounts of energy, resulting in significant CO₂ emissions. A single ceramic plate can emit up to 5.34 kg of CO₂, while plastics and glass also contribute significantly to global warming.

To overcome these issues, tableware made from bioplastics has been introduced, relying on raw materials such as corn and potatoes, which directly compete with the food industry, thereby creating an ethical dilemma. Furthermore, traditional materials such as ceramics and glass, while durable, are fragile, difficult to recycle and non-biodegradable.

Bioplastics have evolved significantly since their early generations, with each step bringing technical and environmental advancements:
First Generation: Primarily manufactured from food sources such as corn, wheat, and potatoes, these bioplastics were pioneers in providing alternatives to fossil-based plastics. Despite their biodegradability, their production raises a major ethical concern as they directly compete with the food supply chain, diverting essential resources in a world facing increasing food insecurity.
Second Generation: These bioplastics utilise agricultural waste and lignocellulosic materials as raw materials, thereby reducing direct competition with food sources. However, this approach faces significant technical challenges, such as conversion efficiency and scalability, which limit its adoption on a large scale.

Therefore, there is a need to develop a tableware item made from a sustainable material that does not leave toxic residues or microplastics, making it an unparalleled alternative in terms of environmental sustainability.

Patent EP 3866647 B1 relates to a biodegradable and disposable table utensil with at least one food-contact surface and a method for its manufacture. The disclosed table utensil consists of a biodegradable substrate made of cellulosic fibres and coated with 25% to 60% by weight of at least one biodegradable polymer, such as polyhydroxyalkanoates (PHA). It exhibits excellent resistance to water and grease absorption.

Patent application EP 4375048 A1 concerns a moulded polyhydroxyalkanoate (PHA) body and a method for its preparation, with the primary objective of reducing adhesion of the moulded body to the mould during thermal processing.

### Technical problems solved by the invention

The aim of the present invention is to develop a tableware item that overcomes the disadvantages associated with the state of the art. Specifically, it aims to provide a lightweight, durable, and environmentally sustainable product made from a material that does not compete with the food industry. This creates a competitive, ethical and sustainable solution that redefines market expectations for tableware, positioning itself as the best alternative to replace traditional materials and outdated bioplastics.

The present invention achieves low carbon emissions during the manufacturing process of tableware items. Furthermore, when combined with a reforestation programme, it promotes an even more significant reduction in carbon emissions, thereby resulting in a more environmentally friendly process.

### Summary of the invention

One of the purposes of the present invention is to provide a tableware item that addresses the disadvantages described above. This and other purposes are achieved according to the present invention through tableware items that comprises a mixture of 55% to 100% (w/w) polyhydroxyalkanoate (PHA) and 0% to 45% (w/w) of a reinforcing agent, and comprising at least one textured area on the surface of the tableware item.

Another purpose of the present invention relates to the method of producing the tableware item.

### Description of the figures

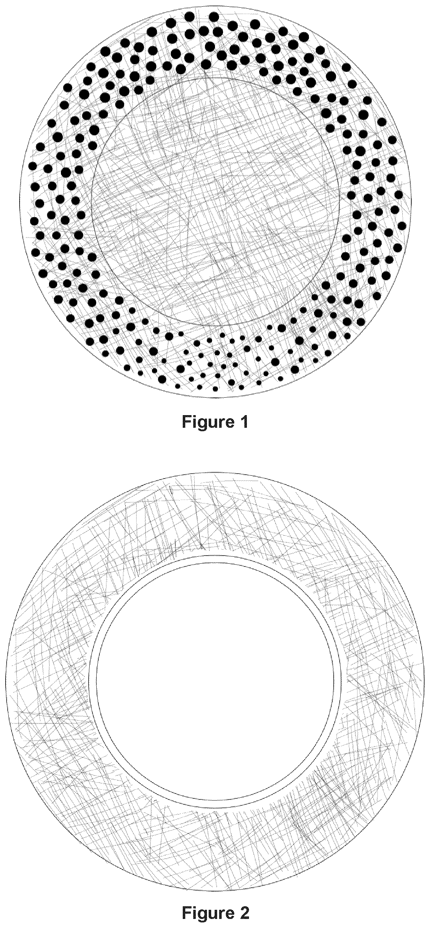

Figure 1 - Representation of the upper surface of a classic model of an embodiment of the present invention.
Figure 2 - Representation of the lower surface of a classic model of an embodiment of the present invention.
Figure 3 - Thermogram of each sample, A1-A7, determined using the NEXTA STA 300 instrument.
Figure 4 - TGA data of each sample, A1-A7.
Figure 5 - Digital images of each hot-pressed sample, A1-A7.
Figure 6 - Chromatic coordinates of samples, A1-A7, before and after dishwashing for 50 days.
Figure 7 - Water contact angles of each neat (before dishwashing), hot-pressed sample, A1-A7.
Figure 8 - Water contact angles of hot-pressed samples, A3, A4, A5, and A6, before and after dishwashing over 50 days.
Figure 9 - Charpy impact strength neat and dishwashed samples, A1-A7.
Figure 10 - Curves force versus deflection recorded in the multiaxial impact tests for bioplastic plates (Sample A5).
Figure 11 - Curves force *versus* deflection recorded in the multiaxial impact tests for ceramic plates.
Figure 12 - Failure mode observed in bioplastic plates subjected to multiaxial impact tests.

### Detailed Description of the Invention

The present invention relates to a tableware item of the present invention comprising a mixture of:
a) 55% to 100% (w/w) polyhydroxyalkanoate (PHA); and
b) 0% to 45% (w/w) of a reinforcing agent,
and at least one textured area on the surface of the said tableware item.

Polyhydroxyalkanoate (PHA) belongs to the third generation of plastics. This generation has overcome the ethical and technical limitations of previous ones by using renewable resources that do not compete with the food industry, such as vegetable oils (e.g., rapeseed oil). Furthermore, PHA offers advanced mechanical and thermal properties, making it highly competitive with traditional plastics and perfectly suitable for applications in the Hospitality, Restaurant, and Café (HORECA) sector.

The PHA used to produce the tableware item of the present invention is a natural and advanced biopolymer, belonging to the third generation of bioplastics. It is produced through a biotechnological microbial fermentation process, in which certain bacteria convert renewable raw materials, such as vegetable oils or sugars, into a polymer that serves as an energy reserve. This material stands out for its durability, biodegradability, and versatility, in addition to being entirely biological, with a substantially lower environmental footprint than traditional plastics and free from microplastics.

The selection of PHA for the production of the tableware item of the present invention is based on its properties, such as:
1. Sustainable Production: Derived from vegetable oils, such as rapeseed oil, PHA avoids competition with the food industry, unlike previous generations of bioplastics (e.g., polylactic acid, PLA), which rely on the cultivation of raw materials such as maize, potatoes or sugarcane.
2. Heat Resistance: With a melting point of 143°C, and depending on its thickness, it can withstand temperatures of up to 140°C without deformation. This makes it ideal for tableware used in high-temperature environments such as hotels, restaurants, and cafés.
3. High Durability: With a tensile strength of 36 MPa and a tensile modulus of 1,940 MPa, the material demonstrates robustness to endure the intensive use characteristic of the HORECA sector.
4. Advanced Biodegradability: PHA is biodegradable across various environments, holding certifications from TÜV Austria: OK Biobased 4-star, indicating a composition of over 80% bio-based carbon; OK Biodegradable SOIL, confirming biodegradation in soil; OK Biodegradable MARINE, verifying its breakdown in river and marine environments; OK compost INDUSTRIAL, certifying biodegradation in industrial composting facilities; and OK compost HOME, ensuring suitability for domestic composting. It decomposes without leaving toxic residues or microplastics.
5. Effective Barrier Against Gases and Moisture: The barrier properties of PHA surpass those of many conventional plastics, offering protection against water vapour, oxygen, and carbon dioxide. This ensures the preservation of the product's functionality and safety.

The role of PHA in the tableware sector redefines the standard of sustainability and efficiency, providing an alternative that integrates technical innovation with environmental responsibility. Its production process consumes less energy and generates lower CO₂ emissions compared to traditional materials such as ceramics, glass and conventional plastics. The tableware items of the present invention, made from PHA, not only meet the technical and aesthetic requirements of discerning consumers but also contribute to waste reduction and climate change mitigation, establishing themselves as a milestone in the transition to environmentally sustainable products.

In the context of the present invention, the polyhydroxyalkanoate (PHA) is preferably selected from the following group: Polyhydroxybutyrate (PHB), Polyhydroxybutyrate-co-hydroxyvalerate (PHBV), Polyhydroxybutyrate-co-hydroxyhexanoate (PHBH), Poly(3-hydroxybutyrate-co-4-hydroxybutyrate) (P3HB4HB), Polyhydroxyoctanoate (PHO), and mixtures thereof.

The choice of the most suitable PHA for manufacturing the tableware item of the present invention depends on several criteria, namely:
1. Mechanical Strength: For the production of durable tableware, PHBH and PHBV are the most suitable options due to their combination of rigidity, impact resistance, and durability.
2. Thermal Resistance: PHBH stands out for its ability to withstand high temperatures (up to 100°C or more), making it ideal for use in the HORECA sector.
3. Biodegradability: While all types of PHA are fully biodegradable, the specific environment in which decomposition occurs (composting, soil, marine, etc.) may influence the material selection.
4. Cost: Although PHA blends with polylactic acid (PLA) are commonly used to reduce costs due to PLA's lower price, this option is not viable for ethical reasons. PLA is often produced from raw materials such as corn, potatoes or sugarcane, which directly compete with food production, thereby violating the ethical commitment to avoid using food-based resources.

In tests conducted, the applicant observed that using 100% pure PHA, meaning without reinforcing agents, for manufacturing small tableware items, such as dessert plates, cups, and cutlery, did not present any issues in processability or surface defects.

However, when producing larger tableware items, such as dinner plates, deep plates, and salad bowls, processability issues may arise, for example, the formation of air bubbles and other disadvantages listed below. These factors increase the likelihood of quality control rejections, breakages, and potentially shorter product lifespan.

It was found that large tableware items made exclusively from PHA may exhibit several drawbacks, including:
- Presence of air bubbles;
- Overly plastic-like tactile feel;
- Difficulties in material processing;
- Inconsistent item surface finishing;
- High production costs;
- Excessive material waste during production.

Surprisingly, it was found that adding a reinforcing agent not only enhances the properties of PHA in large tableware items, but also eliminates the disadvantages mentioned above, optimising the performance of the tableware without compromising its biodegradability. For example:
1. Mechanical Strength - The addition of reinforcing agents increases rigidity and reduces fragility, thereby enhancing the durability of the tableware item.
2. Thermal Resistance - The inclusion of reinforcing agents improves the material's resistance to high temperatures, allowing the tableware item to withstand temperatures of up to 140°C without deformation.
3. Processing - Reinforcing agents facilitate the manufacturing process of large tableware items, ensuring the formation of defect-free items.
4. Aesthetics - The addition of a reinforcing agent can provide a more uniform and smoother surface appearance to the tableware, which is desirable for high-quality products.
5. Production costs - The use of a PHA mixture with a reinforcing agent reduces the cost of raw materials required for manufacturing the tableware while also improving the processability of the mixture.
6. Biodegradability - The incorporation of an inert reinforcing agent does not alter the biodegradability properties of PHA, which is naturally biodegradable in soil, rivers, and marine environments, as well as in both home and industrial composting facilities.

It has also been found that the use of a PHA mixture with a reinforcing agent for the production of small-sized tableware is feasible.

The reinforcing agent may be selected from the following group:
1. Hydrated Magnesium Silicate (Talc, Mg₃Si₄O₁₀(OH)₂: Increases rigidity, thermal resistance, impact resistance, and stability at high temperatures while promoting uniform polymer dispersion during processing.
2. Calcium Carbonate (CaCO₃): One of the most widely used minerals for reinforcing bioplastics. It enhances mechanical strength, particularly rigidity and dimensional stability, while also reducing the overall production cost of the article and improving processability.
3. Silica (SiO₂): Added to increase tensile strength and durability, it also enhances gas and moisture barrier properties, making the tableware more effective for applications such as packaging.
4. Aluminium Hydroxide (Al(OH)₃): Acts as a reinforcing agent and, in certain formulations, provides flame-retardant properties while improving tensile and flexural strength.
5. Nanoclays or Mineral Clays (e.g. Kaolin): Certain PHA formulations incorporate mineral nanoparticles, such as nanoclays, to enhance specific properties, including elasticity, impact resistance and thermal stability. Nanoclays, in particular, are highly effective in improving the balance between strength and lightweight properties of the article.
6. Mineral Fibres: Reduce deformation under load and increase heat resistance, expanding their application in structural and industrial uses without compromising biodegradability;
, and mixtures thereof.

In one embodiment, the small-sized tableware items of the present invention are composed of 100% PHA.

In another embodiment, the small- or large-sized tableware items of the present invention comprise a mixture of PHA and a reinforcing agent, with concentrations ranging from 55% to 99% weight/weight (w/w_{_mixture}) of PHA and 1% to 45% weight/weight (w/w_{_mixture}) of a reinforcing agent. In still another embodiment, the mixture of PHA and a reinforcing agent, has concentrations ranging from 55% to 100% weight/weight (w/w_{_mixture}) of PHA and 0% to 45% weight/weight (w/w_{_mixture}) of a reinforcing agent. It was also observed that mixtures containing a reinforcing agent in excess of 45% w/w_{_mixture} pose processing challenges due to increased viscosity, which impairs flowability during injection moulding. Moreover, a high concentration of the reinforcing agent may compromise the cohesion of the polymer matrix, making the material more brittle and prone to breakage. There is also a risk of aggregate formation, reducing the homogeneity of the compound and accelerating wear of the article during processing. These factors limit production efficiency and the final product quality.

### Reinforcing agent:

It was further found that the quantity of the selected reinforcing agent impacts the properties of the final tableware item, specifically:
a) Hydrated Magnesium Silicate (Mg₃Si₄O₁₀(OH)₂):
   - 5 % to 10 % (w/w): Proportion used to slightly enhance rigidity and dimensional stability without significantly impacting flexibility.
   - 10 % to 25 % (w/w): Intermediate proportion that provides a balanced improvement in rigidity, thermal stability, and impact resistance, making it ideal for durable tableware items.
   - 25 % to 45 % (w/w): Used in applications requiring high rigidity and thermal resistance.
b) Calcium Carbonate (CaCO₃):
   - 5 % to 30 % (w/w): Selected to improve rigidity and reduce costs, especially in high-volume products such as industrial crates and pallets, plastic fittings, plastic jerrycans, automotive components, furniture, construction parts, etc.
c) Silica (SiO₂):
   - 1 % to 5 % (w/w): Due to the high efficiency of silica nanoparticles, small quantities are sufficient to enhance tensile strength, gas barrier properties, and durability without compromising processability.
d) Aluminium Hydroxide (Al(OH)₃):
   - 5 % to 30 % (w/w): Used in higher concentrations for mechanical reinforcement and improved thermal resistance, as well as imparting flame-retardant properties in certain applications.
e) Nanoclays or Mineral Clays (e.g: Kaolin):
   - 1 % to 10 % (w/w): Small quantities are enough to enhance elasticity, impact resistance, and thermal stability, due to the high surface area of nanoparticles, contributing to a smoother texture and a uniform appearance of the article.
f) Mineral Fibres:
   - 1 % to 45 % (w/w): Used in higher concentrations for structural reinforcement and improved flexural strength.

In one embodiment of the present invention, a small-sized tableware item is composed of 100% (w/w) PHA.

In another embodiment of the present invention, a small- or large-sized tableware item is composed of a mixture of 99% (w/w) PHA and 1% (w/w) reinforcing agent; preferably, the mixture comprises 95% (w/w) PHA and 5% (w/w) reinforcing agent; or preferably 85% (w/w) PHA and 15% (w/w) reinforcing agent; or preferably 75% (w/w) PHA and 25% (w/w) reinforcing agent; or preferably 60% (w/w) PHA and 40% (w/w) reinforcing agent; or preferably 55% (w/w) PHA and 45% (w/w) reinforcing agent; more preferably, the mixture comprises 80% (w/w) PHA and 20% (w/w) reinforcing agent.

In a highly preferred embodiment of the present invention, the small- or large-sized tableware item is composed of a mixture of 95% (w/w) PHBH and 5% (w/w) Hydrated Magnesium Silicate; preferably, the mixture comprises 90% (w/w) PHBH and 10% (w/w) Hydrated Magnesium Silicate; or preferably 85% (w/w) PHBH and 15% (w/w) Hydrated Magnesium Silicate; or preferably 75% (w/w) PHBH and 25% (w/w) Hydrated Magnesium Silicate; or preferably 60% (w/w) PHBH and 40% (w/w) Hydrated Magnesium Silicate; or preferably 55% (w/w) PHBH and 45% (w/w) Hydrated Magnesium Silicate; more preferably, the mixture comprises 80% (w/w) PHBH and 20% (w/w) Hydrated Magnesium Silicate.

In one embodiment of the present invention, the small- or large-sized tableware item is composed of a mixture of 95% (w/w) PHBH and 5% (w/w) Calcium Carbonate; or the mixture comprises 85% (w/w) PHBH and 15% (w/w) Calcium Carbonate; or the mixture comprises 75% (w/w) PHBH and 25% (w/w) Calcium Carbonate; preferably, the mixture comprises 70% (w/w) PHBH and 30% (w/w) Calcium Carbonate.

In a preferred embodiment of the present invention, the small- or large-sized tableware item is composed of a mixture of 95% (w/w) PHBV and 5% (w/w) Hydrated Magnesium Silicate; preferably, the mixture comprises 90% (w/w) PHBV and 10% (w/w) Hydrated Magnesium Silicate; or preferably 75% (w/w) PHBV and 25% (w/w) Hydrated Magnesium Silicate; or more preferably, the mixture comprises 60% (w/w) PHBV and 40% (w/w) Hydrated Magnesium Silicate.

In one embodiment of the present invention, the small- or large-sized tableware item is composed of a mixture of 95% (w/w) PHBV and 5% (w/w) Calcium Carbonate; or the mixture comprises 85% (w/w) PHBV and 15% (w/w) Calcium Carbonate; or the mixture comprises 75% (w/w) PHBV and 25% (w/w) Calcium Carbonate; preferably, the mixture comprises 70% (w/w) PHBV and 30% (w/w) Calcium Carbonate.

In one embodiment of the present invention, the small- or large-sized tableware item is composed of a mixture of 99% (w/w) PHBH and 1% (w/w) Silica; or the mixture comprises 98% (w/w) PHBH and 2% (w/w) Silica; or the mixture comprises 95% (w/w) PHBH and 5% (w/w) Silica.

In another embodiment of the present invention, the small- or large-sized tableware item is composed of a mixture of 95% (w/w) PHBH and 5% (w/w) Aluminium Hydroxide; or the mixture comprises 85% (w/w) PHBH and 15% (w/w) Aluminium Hydroxide; or the mixture comprises 75% (w/w) PHBH and 25% (w/w) Aluminium Hydroxide; preferably, the mixture comprises 70% (w/w) PHBH and 30% (w/w) Aluminium Hydroxide.

In one embodiment of the present invention, the small- or large-sized tableware item is composed of a mixture of 99% (w/w) PHBV and 1% (w/w) Silica; or the mixture comprises 98% (w/w) PHBV and 2% (w/w) Silica; or the mixture comprises 95% (w/w) PHBV and 5% (w/w) Silica.

In another embodiment of the present invention, the small- or large-sized tableware item is composed of a mixture of 95% (w/w) PHBV and 5% (w/w) Aluminium Hydroxide; or the mixture comprises 85% (w/w) PHBV and 15% (w/w) Aluminium Hydroxide; or the mixture comprises 75% (w/w) PHBV and 25% (w/w) Aluminium Hydroxide; preferably, the mixture comprises 70% (w/w) PHBV and 30% (w/w) Aluminium Hydroxide.

The tableware item of the present invention may be selected from:
- Small-sized tableware item: dessert plate, cup, cutlery, bowl, tea cup, coffee cup, etc.
- Large-sized tableware item: flat plate, deep plate, salad bowl, serving platter, sauce boat, teapot, mug, frappe cup, liquid container, etc.

### PROCESS

The material to be melted, which may be PHA or a mixture of PHA and a Reinforcing Agent, is supplied in the form of uniform pellets. This form is particularly practical and efficient for industrial processing, as it eliminates the need for a pre-homogenisation step at the manufacturing facility, ensuring a consistently prepared material for processing.

In a first processing step, the material to be melted is introduced directly into the mixer of an injection moulding machine, where it is heated to a temperature of 130°C to 180°C and subjected to slow rotation (between 30 to 60 rpm, preferably 50 rpm) for the time required to form a homogeneous molten material, which is approximately 55 to 65 seconds.

The slow rotation during this processing step provides several advantages: it allows control over the high viscosity of PHA at low temperatures, reduces air bubble formation and other material defects, ensures homogeneous mixing, protects the mixture from thermal and mechanical degradation, improves mould-filling precision, and enhances energy efficiency in the moulding process, ultimately ensuring high-quality tableware items free from structural defects.

It has been observed that PHA degrades at temperatures above 180°C, that at 160°C the mixture becomes more fluid, that above 143°C there is a higher likelihood of air bubble formation, particularly in the production of large-sized tableware items, and that below 140°C the mixture lacks sufficient fluidity for proper injection, resulting in defective or incomplete pieces.

To resolve the issue of air bubble formation during the production of large-sized tableware items, it has been found that the addition of a reinforcing agent to PHA prevents bubble formation while also improving the processing characteristics of the mixture. This allows the mixture to be heated to temperatures between 140°C and 150°C without this drawback.

In a preferred embodiment, the heating temperature of the pellets is 140°C to 160°C, more preferably is 141°C to 155°C, and even more preferably is 143°C. Non-limiting examples of heating temperatures include 140°C, 141°C, 142°C, 143°C, 144°C, 145°C, 146°C, 147°C, 148°C, 149°C, 150°C, 151°C, 152°C, 153°C, 154°C, 155°C, 156°C, 157°C, 158°C, 159°C or 160°C.

The molten material, comprising 100% *(w*/*w)* PHA or a mixture of PHA and a reinforcing agent, is injected into a mould with irregular patterns on its inner surface, which is preheated to a temperature of 50°C to 70°C to prevent thermal shocks. During the moulding process of the molten material inside the mould, two pressure stages are applied to ensure the complete formation of the material within the mould. These steps can be described as follows:
a) The molten material is injected into the mould under an initial pressure of 120 to 140 bar, preferably 130 bar, for 7 to 10 seconds, preferably for 8.5 seconds. This high initial pressure is a necessary technical strategy to accommodate the properties of PHA, as it ensures proper injection of the molten material into the mould, allowing the production of high-quality items that are free from air bubbles and exhibit the desired technical characteristics.
b) After the initial filling of the mould with the molten material, the injection system applies a secondary pressure of 20 to 40 bar, preferably 30 bar, for 12 to 18 seconds, preferably for 15 seconds. This reduced pressure is applied solely to prevent backflow of the molten material into the screw and to ensure proper positioning of the molten material within the mould until the cycle is complete, allowing it to cool and solidify, thereby forming the final tableware item in the desired shape. The cooling of the mould is facilitated by an integrated cooling system within the mould itself, ensuring that the mould remains at 70°C, thereby increasing production efficiency.

The integrated cooling system enables thermal control of stainless steel moulds in plastic injection moulding machines through the use of mould temperature controllers (TCUs - Temperature Control Units), which heat and cool the mould by circulating pressurised water or thermal oil through its internal channels. The heating is carried out using electric resistances, while the cooling utilises industrial chillers or cooling towers to maintain the optimal temperature. This process ensures dimensional stability, prevents defects, and optimises the cycle time. Adequate thermal control is essential for the quality of tableware, especially in demanding materials such as PHA, guaranteeing fluidity, mechanical resistance and a uniform finishing.

Once the tableware item has solidified and cooled, it is ejected from the mould, ready for further processing, such as an optional polishing step. This polishing step removes surface imperfections and ensures a uniform finish, giving the tableware items of the present invention a high-quality aesthetic and functional touch. This polishing step also allows for correction of minor defects on the edges or surfaces of the tableware items, ensuring durability and a premium aesthetic finishing.

In a preferred embodiment, regardless of the size of the tableware item to be produced, a moulding cycle for obtaining said tableware item has a duration of 100 to 160 seconds, for a mould heating temperature of 50 to 70°C and a mixture heating temperature of 140°C to 160°C. Each cycle includes:
- Heating step of pure PHA or a mixture of PHA and reinforcing agent at low rotation speed (30-40 rpm) - 54 to 68 seconds;
- Injection of the molten material into the preheated mould at an initial pressure of 120-140 bar - 4.5 to 18.5 seconds;
- Reduction of pressure in the screw to 30 bar - 11 to 25 seconds;
- Cooling of the moulded tableware item within the mould - 19.5 to 33.5 seconds;
- Opening of the mould - 5 seconds;
- Ejection of the tableware item from the mould - 6 to 10 seconds.

The moulds commonly used in the plastic industry are made of aluminium to reduce costs. However, the reinforcing agent is abrasive and causes corrosion in parts of the injection moulding machine made of aluminium, particularly at the injection nozzle. Thus, for the manufacture of the tableware items of the present invention, all components of the injection moulding machine, including the mould itself, are made of stainless steel to prevent corrosion, thereby ensuring the longevity of the moulds and the precision of the process.

Before the start of each moulding cycle, the mould is gradually heated to a temperature of 50°C to 70°C to prevent thermal shock, which could cause deformation or reduce the lifespan of the stainless steel. This preheating step at 50°C to 70°C is essential to ensure both the final quality of the tableware items and the efficiency of the injection moulding process.

Each component of the mould has at least one textured zone containing a functional tactile texture on the surface of the mould that comes into contact with the molten material. This textured zone is formed by a plurality of irregular patterns that protrude from the surface of the mould that is in contact with the molten material, and said irregular patterns are imprinted to predetermined areas of the surface of the tableware items of the present invention. These textured zones are shallowly designed and are perceivable by touch without creating deep reliefs that might compromise the structural integrity of the tableware item. Furthermore, they enhance adhesion between these zones and the user's grip or between these zones and any surface with which they come into direct contact, thereby preventing slippage and the potential dropping of the tableware item. Additionally, they create a sensory experience for the user of these tableware items.

As they are made from biodegradable material, specifically PHA, a 100% biodegradable compound (certified OK Biobased**** by TÜV Austria), and free from inorganic additives that would harden the items and reduce their biodegradability, the tableware items of the present invention exhibit good mechanical and thermal resistance while also being more flexible compared to conventional materials such as ceramics or glass. Due to their increased flexibility, these tableware items are more prone to developing marks as a result of daily use in the HORECA sector.

The advantage of having at least one textured zone consisting of a series of ridges, grooves, or striations on the surface of the tableware item is to enhance adhesion between these textured zones and the user's grip or any surface that comes into direct contact with them, thereby preventing slippage and the potential dropping of the tableware item.

The presence of textured zones is particularly beneficial in situations where the user needs to hold the tableware item, for example at events where the user eats standing up while holding the tableware, as well as breakfast buffets, and also in wet areas such as pool and beach bars.

Examples of elements that come into direct contact with the textured zones include food, other tableware items, and the user's hands, etc.

An additional advantage of having at least one textured zone with a functional tactile texture on at least one surface of the tableware item is that it minimises the visual impact of usage marks that may result from daily handling, preventing visual wear and extending the item's aesthetic lifespan, thereby avoiding premature disposal for purely visual reasons. Products that are more resistant to visual wear have a longer lifespan in the HORECA sector, reducing the need for frequent replacements. This durability is one of the pillars of sustainability, as it prevents waste and lowers the environmental impact throughout the lifecycle of the tableware items.

In one embodiment, the plurality of irregular patterns present in the textured zones is imprinted on at least one area of the tableware article. These irregular patterns may take the form of shallow ridges, grooves, or striations in at least one area of the item's surface.

In one embodiment, the textured zone is arranged in at least one area of the tableware item, such as, for example, the outer surface, inner surface, upper surface, lower surface, or specific areas of certain items, including but not limited to handles, grips, concave parts, blades, and others. Alternatively, the textured zone may be arranged across the entire surface of the tableware item.

The tableware items of the present invention are durable and environmentally sustainable, as their production releases a significantly lower amount of carbon dioxide into the atmosphere compared to the production of porcelain or glass items.

The Applicant has integrated a project aimed at promoting tree planting to reduce the carbon footprint associated with the production of the tableware items of the present invention. A single tree is capable of absorbing approximately 600 kg of CO₂ over its lifetime. According to ISO 14040 and ISO 14044 standards, it has been estimated that each tableware item of the present invention generates between 0.84 kg and 1.04 kg of CO₂, considering all steps of its lifecycle, including the production and transportation of raw materials and the manufacturing of the tableware item by injection moulding (both with and without renewable energy).

Thus, each planted tree would be capable of sequestering over its lifetime an amount of CO₂ equivalent to that generated in the production of approximately 600 tableware items.

The optional polishing step for the tableware items produced in the moulding process may be carried out through the manual removal of burrs or by sanding (fine adjustment), using tools suitable for these types of finishing. The removal of burrs is a simple and efficient step that allows for precision in eliminating excess material without damaging the tableware item.

During the polishing step, a scalpel may be used to remove unwanted residues left by the mould, and if necessary, a fine sandpaper may be applied to smooth any residual marks along the mould joint line, ensuring a more uniform and aesthetically refined finish for the tableware item.

### RESULTS

### Test 1 - Comparative results of several samples of bioplastics (PHA)

Samples of commercially available bioplastics (PHA) were tested to see if they could be used as a material for sustainable tableware.

The samples studied are:
- Sample A1 - PHA-PHBH (100%);
- Sample A2 - PHA-PHB (70%) + Reinforcement Agent (Calcium) (30%);
- Sample A3 - PHA-PHBH (80%) + Reinforcement Agent (Talc) (20%);
- Sample A4 - Control sample - PBS (80%) + non-biodegradable material, PBT (20%);
- Sample A5 - PHA-PHBH (80%) + Reinforcement agent (Talc) (20%);
- Sample A6 - PHA;
- Sample A7 - PHA-PHBV (100%).

### 1.1. Thermal Profile

To determine the appropriate hot-pressing temperature, all samples were subjected to thermal analysis. The thermal properties were evaluated using two complementary techniques: Differential Scanning Calorimetry (DSC) and Thermogravimetric Analysis (TGA).

For DSC analysis, the samples were initially heated at a rate of 10 °C min⁻¹ from 25 °C to 200 °C to remove any previous thermal history, followed by cooling at 20 °C min⁻¹ to -50 °C. During the second thermal cycle, the samples were reheated to 200 °C at a rate of 10 °C min⁻¹. The cold crystallization temperature (T_{cc}), melting temperature (Tₘ), and glass transition temperature (T_{g}) were determined during the second heating cycle. These experiments were carried out using both the Linseis Chip-DSC 10 and the NEXTA STA 300 instruments. For the Linseis Chip-DSC 10, only a single heating step, following the final temperature conditions, was performed, as seen in Table 1.

**Table 1 - Melting temperatures (Tₘ) for each sample, A1-A7**

| **Sample** | **Initial Tₘ (°C)** | **Peak Tₘ (°C)** | **End Tₘ (°C)** |
|---|---|---|---|
| **A1** | 156.4 | 161.8 | 174.2 |
| **A2** | 146.5 | 158.0 | 165.6 |
| **A3** | 176.8 | 187.0 | 194.3 |
| **A4** | 152.0 | 167.7 | 177.5 |
| **A5** | 141.2 | 162.7 | 167.3 |
| **A6** | 159.9 | 166.4 | 173.5 |
| **A7** | 176.8 | 188.3 | 193.4 |

The results reveal significant differences in the thermal behavior of the samples, highlighting variations in polymer composition and crystallinity. Samples A3 and A7 exhibited the highest Peak Tₘ values, 187.0 °C and 188.3 °C, respectively, along with broader melting ranges. This indicates a more complex crystalline structure and superior thermal stability, making these materials suitable for high-temperature applications. In contrast, A2 and A5 showed lower Peak Tₘ values of 158.0 °C and 162.7 °C, respectively, with narrower melting ranges, suggesting more uniform crystallinity and suitability for lower-temperature processing conditions. Other samples, such as A1, A4 and A6, demonstrated intermediate melting behavior, indicating their potential versatility for a variety of applications.

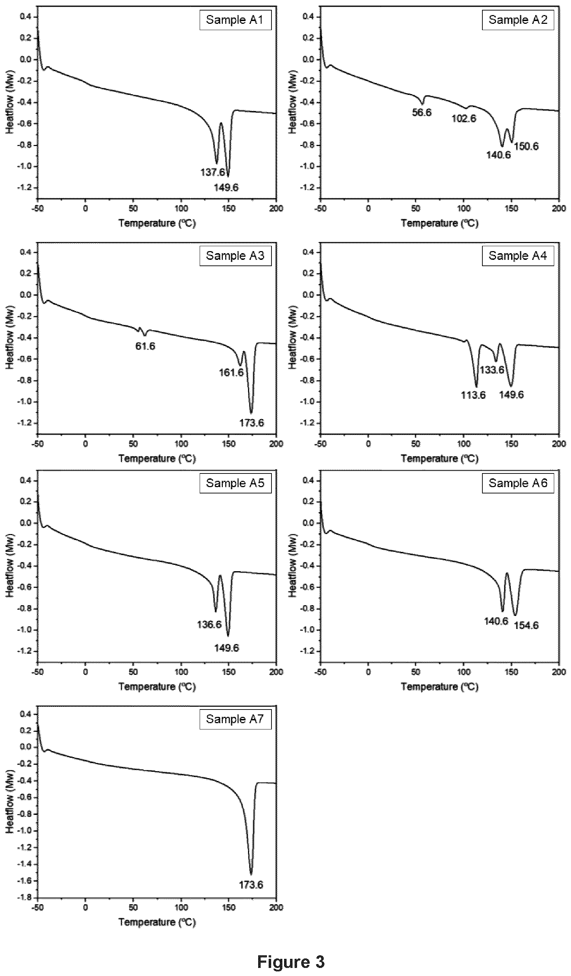

The thermograms obtained using the *NEXTA STA 300 instrument* and shown in ***Figure 3****,* complement the melting temperature data by providing insights into the thermal transitions and stability of the samples. The experiments involved two heating steps: the first to erase the thermal history of the materials and the second to evaluate their intrinsic thermal properties. The second heating step revealed cold crystallization behavior in several samples, particularly those with broader melting ranges, such as A3 and A7. This behavior indicates the ability of these materials to reorganize their crystalline structure during cooling, which is crucial for processing techniques like hot-pressing. The thermograms also highlight differences in thermal stability across the materials. Samples with higher Peak Tₘ values, such as A3 and A7, displayed higher melting onset temperatures, confirming their superior thermal stability. Conversely, A2 and A5 showed lower melting onset temperatures, indicating reduced stability under elevated temperatures.

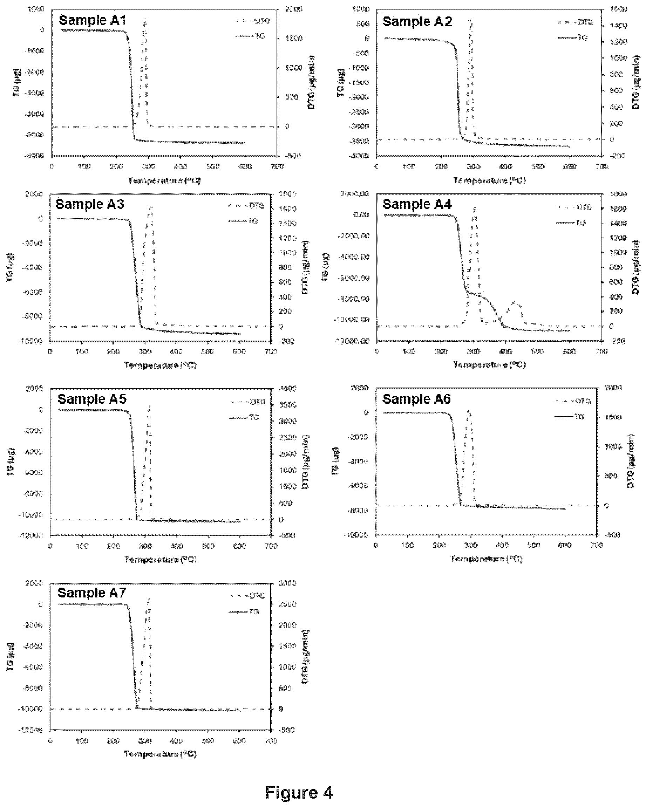

In addition to DSC, TGA was performed to assess the thermal stability and decomposition behavior of the samples. TGA was performed on approximately 5 mg of each sample using the NEXTA STA 300 instrument. The samples were heated at a rate of 5 °C min⁻¹ from 50 °C to 600 °C under an air atmosphere, with an airflow rate of 40 mL min⁻¹ (method adapted from Volpini et al., Royal Society Open Science, 9 (2022)). The TGA (weight loss) and DTG (derivative weight loss) curves for the analyzed materials are presented in Figure 4.

Samples A3 and A7 exhibited the highest thermal stability, with degradation onset temperatures above 300 °C and well-defined single decomposition steps observed in the DTG curves. Additionally, their high residual mass suggests the presence of inorganic fillers or thermally stable additives that enhance their overall thermal resistance. In contrast, samples A2 and A5 demonstrated lower onset degradation temperatures, around 250 °C, and multi-step decomposition behavior in the DTG curves. Intermediate thermal stability was observed in samples such as A1, A4, and A6, which exhibited degradation onset temperatures between 270 °C and 290 °C. Their DTG curves showed distinct, sharp peaks, indicating a relatively uniform composition with moderate thermal resistance. The residual mass at 600 °C varied across the samples, providing additional information about their composition. Samples with higher residual masses, such as A3 and A7, likely contain inorganic components or thermally stable additives, while those with lower residual masses, like A2 and A5, suggest a composition dominated by organic components.

Based on the DSC and TGA results, the hot-pressing temperatures were set as follows: A1 - 165 °C; A2 - 166 °C; A3 - 189 °C; A4 - 165 °C; A5 - 165 °C; A6 - 170 °C; and A7 - 189 °C.

### 1.2. Macroscopic features of hot-pressed samples

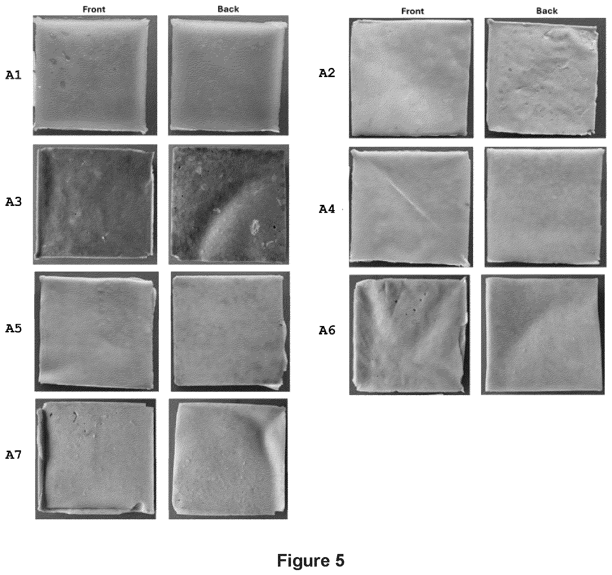

Following the determination of the thermal profiles and the selection of optimal hot-pressing temperatures, the samples were processed into plates using hot-pressing, and the results are present in Figure 5.

The plates exhibited variations in surface smoothness, color, and structural integrity, which provide insights into the materials' performance under the applied hot-pressing conditions. The plate from sample A1 (PHBH) showed a relatively smooth and uniform surface, indicating good material flow during hot-pressing. However, minor imperfections suggest potential issues such as incomplete melting or uneven pressure distribution. The plates from A2, A3, A5, and A6 (PHA) demonstrate more variability. Among these, sample A3 stands out with a smooth and uniform surface, suggesting it was well-suited to the selected hot-pressing parameters. In contrast, samples A2 and A5 exhibit visible surface defects, such as bubbles and uneven textures, which could be attributed to trapped air or insufficient pressure during processing. Sample A6 appears more homogeneous, with only slight discoloration, indicating good thermal stability under the applied conditions. The plate from A4 (PBS_{Control}) is smooth and homogeneous, characteristic of PBS materials that melt and flow well during processing. However, slight yellowing is observed, a common indication of minor thermal degradation at elevated temperatures. In the case of sample A7 (PHBV), the plate exhibits a combination of smooth regions and defects such as cracks and wrinkles, likely caused by the material's brittleness or rapid cooling during the process, which may have affected its structural integrity.

### 1.3. Dishwashing resistance

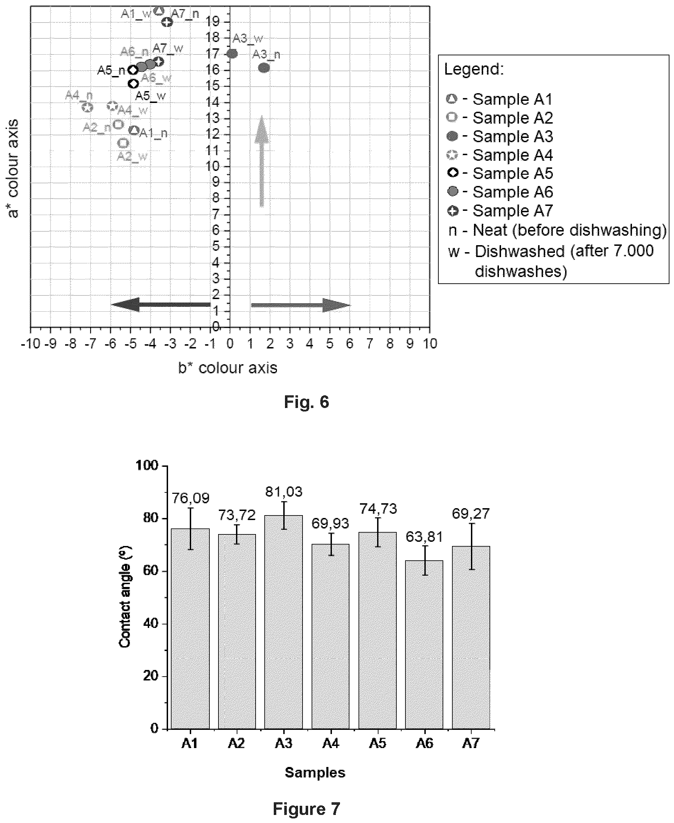

To evaluate the durability and visual stability of the bioplastic samples under practical usage conditions, chromatic properties of each sample were assessed before and after being subjected to repeated dishwashing cycles, about 7.000 dishwashes at 92°C, over the course of 50 days, as shows, and are present on Figure 6.

The chromatic stability of the bioplastic samples varies significantly, with samples A1 and A2 showing the least changes, suggesting greater resistance to washing-induced effects. Samples A3 to A6, particularly sample A6, performed well in terms of appearance, maintaining a visually acceptable state after dishwashing. Conversely, sample A7 exhibited the most noticeable changes, highlighting the need for improved formulations or protective measures to enhance its durability.

### 1.4. Surface water wettability - Water Contact Angle (WCA)

To evaluate the hydrophobicity and surface characteristics of the hot-pressed bioplastics, water wettability measurements were performed. This analysis was also conducted on samples A3 to A6, identified as the most promising during the dishwashing resistance evaluation, both before and after the dishwashing process. The contact angle measurements presented in **Figure 7** provide insights into the surface wettability of the neat, hot-pressed samples (A1 to A7).

The results show that none of the bioplastics reached a contact angle above 90°, indicating that all samples exhibit hydrophilic behavior to varying degrees. The contact angles ranged from 63.81° (Sample A6) to 81.03° (Sample A3), highlighting differences in water interaction across the samples. Sample A3 exhibited the highest contact angle (81.03°), suggesting it is the least hydrophilic among the tested bioplastics, with relatively lower interaction with water. This property may still offer some level of water resistance compared to the other samples, making A3 potentially more suitable for applications where reduced water affinity is desired. In contrast, sample A6 displayed the lowest contact angle (63.81°), indicating a more hydrophilic surface and greater water interaction. The remaining samples, including sample A1 (76.09°), sample A2 (73.72°), sample A4 (69.93°), sample A5 (74.73°), and sample A7 (69.27°), demonstrated moderate contact angles, showing varying levels of hydrophilicity. The differences in wettability can be attributed to the distinct polymer compositions and surface characteristics resulting from the hot-pressing process.

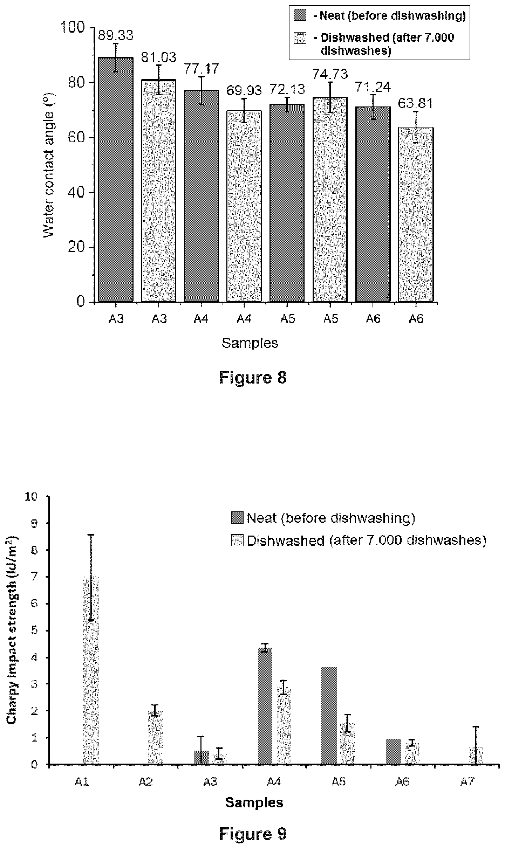

The changes in surface water wettability of samples A3 to A6 after prolonged exposure to dishwashing cycles (about 7.000 dishwashes, at 92°C), as shown in Figure 8, revealed that Samples A3, A4 and A6 initially exhibited the highest water contact angle before washing compared to the water contact angle after washing, reflecting a reduction in hydrophobicity, leading to the conclusion that Samples A3, A4 and A6 maintained relatively stable surface properties under washing conditions. On the other hand, for Sample A5 there was a slight increase in the water contact angle before and after washing the sample, showing a slight tendency towards hydrophobicity.

In general, the results show that all the Samples tested behaved hydrophilically, since none reached the 90° threshold for hydrophobicity.

The slight differences in the water contact angle of the samples suggest good stability under prolonged washing conditions, showing slight surface degradation or chemical interactions that affect their wettability. These results indicate that the bioplastics demonstrate reliable surface properties, making them suitable for applications requiring repeated washing or exposure to water. Sample A5 stands out for being the only one to show an increase in the angle of contact with water, showing its greater ability to repel water even for applications requiring repeated washing or exposure to water.

### 1.5. Charpy impact strength test

The Charpy impact test was conducted using a *Ray-Ran Advanced Pendulum Impact System* to measure the energy absorbed by a material during fracture. The test used a pendulum with a mass of 1.189 kg and an impact velocity of 2.9 mm/s in an unnotched test configuration. Samples were tested before (Samples A3 to A6) and after 50 days in a dishwasher (Samples A1 to A6, about 7.000 dishwashes). The samples were cut using an *Epilog laser machine,* with approximate dimensions of 60 mm × 10 mm × 3 to 5 mm (length x width x thickness). The results indicate significant differences in impact resistance between neat and dishwashed samples and are shown in Figure 9.

Neat samples generally exhibited higher impact strength compared to their dishwashed counterparts after 7.000 dishwashes, confirming the degradation effect caused by dishwashing. Sample A1, a dishwashed sample, demonstrated the highest impact strength among all dishwashed samples, reaching approximately 7 kJ/m² with a large error margin, indicating variability in performance. Conversely, Samples A3 and A6 exhibited the lowest impact strength among neat samples, with values close to 0.5 kJ/m², which further decreased after dishwashing. Among the neat samples, A4 demonstrated the highest impact strength, exceeding 4 kJ/m², while Sample A5 also maintained relatively high impact resistance. In contrast, after dishwashing, Samples A4 and A5 both showed noticeable reductions in impact strength, dropping below their neat counterparts but still performing better than other dishwashed samples, such as Samples A3 and A6.

The trend observed and shown in Figure 9 confirms that exposure to dishwashing conditions leads to a significant decline in material performance after 7.000 dishwashes, particularly for samples with lower initial impact strength.

### 1.6. Conclusion

The evaluation of commercially available bioplastics for sustainable tableware applications has highlighted significant differences in their thermal stability, mechanical performance and water resistance.

Among the tested samples, Sample A1 (PHBH) and Sample A5 (PHBH) emerged as the most promising candidates, although their performance varied depending on the desired application criteria.

Even though Sample A1 showed more promising results, Sample A5 was chosen because it is very cost-effective.

Therefore, Sample A5 stood out as the best to produce sustainable tableware, combining high thermal and mechanical resistance with optimal functional performance in the HORECA sector.

### Test 2. Comparison of Sample A5 (Test 1) with a Porcelain sample

To compare the properties of Sample A5 (as described in Test 1) with a porcelain sample, tests were conducted to measure their properties. The results obtained are shown in Table 2.

**Table 2 - Comparison of Sample A5 with a porcelain sample**

| **Criteria** | **Sample A5** | **Porcelain sample** |
|---|---|---|
| **Weight per plate (g)** | 300 | 600-800 |
| **Impact resistance (kJ/m²)** | 18.3 (without notch) (in a test carried out by the manufacturer in accordance with ISO 179-1/1 eU) | 0.5 to 1 |
| **Flexural modulus (MPa) (ISO 178)** | 2563.9 | ~50,000 |
| **Thermal Resistance (Maximum Supported Temperature) (°C) (ISO 75)** | 123.9 | >1000 |
| **Sustainability*** | Total (3 - 15 years) | Non-biodegradable |

The comparison between Sample A5 and the Porcelain Sample clearly demonstrates the superiority of A5 in the HORECA sector, based on essential criteria such as lightness, impact resistance and sustainability:
1. Weight: Sample A5 is 2.5 times lighter than porcelain, making handling and stacking easier while reducing transport and storage costs. The lower weight also lessens the physical strain on staff in the HORECA sector.
2. Impact Resistance: Sample A5 is up to 18.3 times more impact-resistant than porcelain. This means that tableware made with Sample A5 is more durable for intensive use, with a significantly lower likelihood of breaking when dropped or subjected to impacts, greatly reducing waste, premature disposal, and replacement costs. Porcelain frequently breaks due to its fragility and improper stacking.
3. Flexural Modulus - Rigidity vs Durability: Although porcelain has a significantly higher flexural modulus, its extreme rigidity makes it prone to breaking under pressure or impact. In contrast, Sample A5, with its moderate flexibility, can withstand intensive handling, frequent stacking, and adverse conditions without easily breaking.
4. Thermal Resistance: Porcelain is ideal for applications requiring exposure to extreme temperatures, such as salamanders or ovens. However, tableware made with Sample A5 is sufficient for use in industrial dishwashers and serving hot food, maintaining its structural integrity up to 123.9°C without deformation. While porcelain is suitable for ovenware, thermal shock breakages are common.
5. Sustainability*: Sample A5 is biodegradable in soil, rivers, marine environments, and both industrial and domestic composting units, leaving no toxic residues or microplastics-decomposing within up to three years in composting units (domestic or industrial) and up to 15 years in natural environments (soil, rivers, or marine conditions). It aligns with sustainable practices, whereas porcelain is not biodegradable, difficult to recycle, has a higher environmental impact and requires frequent replacement due to its high breakage tendency.

The tests conducted on the seven samples confirmed that Sample A5 was the most suitable material for durable and sustainable tableware applications. However, for broader comparisons, such as with porcelain, certified tests performed by the manufacturer provide greater precision and reliability, further reinforcing the superiority of the tableware of the present invention made with Sample A5 in terms of mechanical strength and functional performance. These results confirm the suitability of the tableware for intensive use in the HORECA sector, surpassing traditional materials such as porcelain.

It was surprisingly found that Sample A5 is the ideal choice for tableware in the HORECA sector due to its unique combination of lightweight properties, impact resistance, and sustainability. Although porcelain is more suitable for specific high-temperature applications, its disadvantages in weight, fragility, and environmental impact make Sample A5 a more practical, economical and durable solution for everyday use in the HORECA sector.

### Test 3. Comparison of a bioplastic plate with a high-temperature ceramic plate

To compare the properties of a bioplastic plate made with Sample A5 (as described in Test 1) with a high-temperature ceramic plate (manufactured using high-temperature firing (1240°C to 1350°C), which is known for its durability, low porosity, and high resistance to thermal shock), the multi-axial impact behaviour of ten bioplastic plates (Sample A5) and ten high-temperature ceramic plates was determined according to ISO 6603-2:2023 and under the test conditions presented in Table 3.

**Table 3 - Experimental test conditions used to determine puncture impact resistance according to ISO 6603-2:2023 standard**

| | |
|---|---|
| Equipment | Ceast Fractovis Plus |
| Impactor | Hemispherical impactor with a diameter of 20 mm, non-lubricated |
| Impact velocity | 2.8 m/s |
| Mass applied | 5.045 kg |
| Test temperature | (23±2)°C |
| samples Packaging | More than 24 hours, at (23±2)°C and (50±10)% relative humidity |
| Note | Samples were fixed using a support and a locking ring, both with an internal diameter of 40 mm |

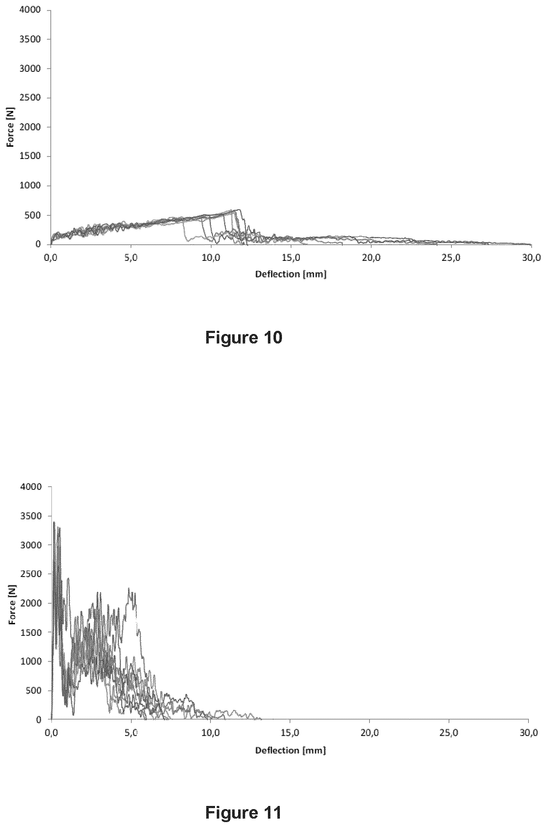

The force *versus* deflection curves recorded in multiaxial impact tests carried out on the plate samples are shown in Figure 10 and Figure 11, respectively. The values of maximum force (FM), deflection and energy at maximum force (IM and EM, respectively), puncture deflection (Ip) and puncture energy (Ep) determined from the aforementioned curves are presented in Table 4 and Table 5, respectively.

**Table 4 - Multiaxial impact properties [ISO 6603-2:2023] obtained for the Bioplastic plates**

| **Sample** | **FM (N)** | **IM (mm)** | **EM (J)** | **Ip (mm)** | **Ep (J)** |
|---|---|---|---|---|---|
| 1 | 501 | 9.69 | 3.01 | 9.93 | 3.12 |
| 2 | 535 | 11.42 | 3.52 | 11.74 | 3.65 |
| 3 | 482 | 9.23 | 2.8 | 9.56 | 2.95 |
| 4 | 512 | 9.59 | 3.11 | 10.02 | 3.32 |
| 5 | 569 | 11.44 | 3.88 | 11.74 | 4.03 |
| 6 | 590 | 11.23 | 3.83 | 11.35 | 3.9 |
| 7 | 475 | 8.15 | 2.54 | 8.35 | 2.63 |
| 8 | 557 | 11.46 | 3.8 | 11.78 | 3.96 |
| 9 | 594 | 11.75 | 4.14 | 12.14 | 4.34 |
| 10 | 519 | 10.71 | 3.38 | 10.93 | 3.48 |
| **Average** | 533 | 10.47 | 3.4 | 10.76 | 3.54 |
| **Standard deviation** | 43 | 1.22 | 0.52 | 1.23 | 0.54 |

**Table 5 - Multiaxial impact properties [ISO 6603-2:2023] obtained for the Ceramic plates of high temperature**

| **Sample** | **FM (N)** | **IM (mm)** | **EM (J)** | **Ip (mm)** | **Ep (J)** |
|---|---|---|---|---|---|
| 1 | 2827 | 0.43 | 0.74 | 0.62 | 0.74 |
| 2 | 2981 | 0.47 | 0.76 | 0.62 | 0.76 |
| 3 | 2640 | 0.17 | 0.14 | 0.52 | 0.14 |
| 4 | 3293 | 0.51 | 0.9 | 0.62 | 0.9 |
| 5 | 3310 | 0.41 | 0.75 | 0.71 | 0.75 |
| 6 | 3257 | 0.17 | 0.19 | 0.46 | 0.19 |
| 7 | 2934 | 0.38 | 0.6 | 0.51 | 0.6 |
| 8 | 2983 | 0.43 | 0.75 | 0.66 | 0.75 |
| 9 | 3399 | 0.17 | 0.21 | 0.63 | 0.21 |
| 10 | 2706 | 0.17 | 0.15 | 0.66 | 0.15 |
| **Average** | 3033 | 0.33 | 0.52 | 0.6 | 0.52 |
| **Standard deviation** | 268 | 0.14 | 0.31 | 0.08 | 0.31 |

The maximum impact force (FM), which indicates the material's ability to resist initial puncture, in the case of ceramic plates is six times greater than that of bioplastic plates. However, in terms of impact energy, which reflects the material's ability to absorb energy (EM) and resist crack propagation (Ep), this is greater in the case of bioplastic plates (about 3,5 J in the case of bioplastic plates; about 0,5 J in the case of ceramic plates.

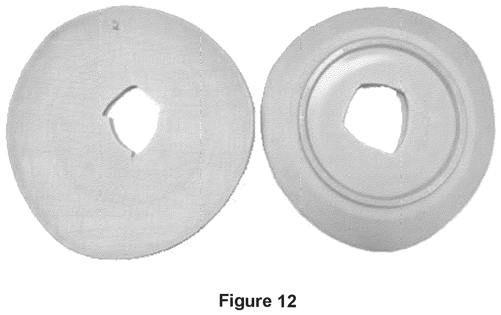

The reduced ability to absorb and dissipate impact energy effectively makes ceramic plates more susceptible to cracking (once a crack is initiated, it can rapidly propagate through the material, leading to catastrophic failure). In fact, the ceramic plates broke into several fragments. In the bioplastic plates (Sample A5), the fracture manifested as a hole in the impact zone, as shown in Figure 12.

Furthermore, bioplastic plates (Sample A5) may undergo greater deformation before breaking, as evidenced by the higher IM value, which makes them more resistant to shattering.

To further illustrate the invention, the following section describes, for illustrative and non-limiting purposes, some examples of manufacturing a tableware item according to the present invention.

### Examples

### Example 1 - Manufacture of a shallow plate (80% (w/w) PHBH and 20% (w/w) hydrated magnesium silicate)

The production of a shallow plate using pellets of a mixture containing 80% *(w*/*w)* PHBH and 20% (w/w) hydrated magnesium silicate takes around 120 seconds. To achieve this, 350-500 grams of the pellet mixture were added to a mixer and heated to 143°C with slow rotation. The mixture was then injected at a primary pressure of 130 bar into a mould featuring irregular patterns, preheated to 70°C. To prevent the molten mixture from returning to the mixer, a secondary pressure of 30 bar was applied to the screw. The mixture was cooled and solidified inside the mould. Finally, the plate containing irregular patterns on at least one surface was ejected from the machine, ready for use.

The same procedure was also carried out using a mould with irregular patterns preheated to 50°C, under the same conditions.

### Example 2 - Manufacture of a cutlery item (99% (w/w) PHBH and 1% (w/w) hydrated magnesium silicate)

The production of a cutlery item uses 25-100 grams of pellets from a mixture containing 99% (w/w) PHBH and 1% (w/w) hydrated magnesium silicate, with a total processing time of approximately 100 seconds.

The moulding cycle in this example follows the same steps as described in Example 1, using a mould featuring irregular patterns preheated to a temperature of 50C and 70°C.

### Example 3 - Manufacture of a serving dish (60% (w/w) PHBH and 40% (w/w) hydrated magnesium silicate)

The production of a serving dish requires 1500-2500 grams of pellets from a mixture containing 60% (w/w) PHBH and 40% (w/w) hydrated magnesium silicate, with a total cycle duration of approximately 160 seconds.

The moulding cycle in this example follows the same steps as described in Example 1, using a mould featuring irregular patterns preheated to a temperature of 50C and 70°C.

### Example 4 - Manufacture of a serving dish (70% (w/w) PHBHx and 30% (w/w) calcium carbonate)

The production of a serving dish requires 1500-2500 grams of pellets from a mixture containing 70% (w/w) PHBHx and 30% (w/w) calcium carbonate, with a total cycle duration of approximately 160 seconds.

The moulding cycle in this example follows the same steps as described in Example 1, using a mould featuring irregular patterns preheated to a temperature of 50C and 70°C.

### Example 5 - Manufacture of a cup (99% (w/w) PHBV and 1% (w/w) hydrated magnesium silicate)

The production of a cup requires 100-200 grams of pellets from a mixture containing 99% (w/w) PHBV and 1% (w/w) hydrated magnesium silicate, with a total cycle duration of approximately 160 seconds.

The moulding cycle in this example follows the same steps as described in Example 1, using a mould featuring irregular patterns preheated to a temperature of 50C and 70°C.

### Example 6 - Manufacture of a cup (100% (w/w) PHBH)

The production of a cup uses 100-200 grams of 100% (w/w) PHBH pellets and takes around 160 seconds.

The moulding cycle in this example follows the same steps as described in Example 1, using a mould featuring irregular patterns preheated to a temperature of 50C and 70°C.

### Example 7 - Manufacture of a saucer (100% (w/w) PHBV)

The production of a saucer uses 75-150 grams of 100% (w/w) PHBV pellets, and takes around 160 seconds.

The moulding cycle in this example follows the same steps as described in Example 1, using a mould featuring irregular patterns preheated to a temperature of 50C and 70°C.

### Example 8 - Manufacture of a plate (55% (w/w) PHBH and 45% (w/w) hydrated magnesium silicate)

The production of a plate requires 350-500 grams of pellets from a mixture containing 55% (w/w) PHBH and 45% (w/w) hydrated magnesium silicate, with a total cycle duration of approximately 160 seconds.

The moulding cycle in this example follows the same steps as described in Example 1, using a mould featuring irregular patterns preheated to a temperature of 50C and 70°C.

### Example 9 - Manufacture of a plate (65-85% (w/w) PHBH and 15-35% (w/w) hydrated magnesium silicate)

The production of a plate uses 350-500 grams of pellets of a mixture that may vary between 65-85% *(w*/*w)* PHBH and 15-35% (w/w) hydrated magnesium silicate, with a duration ranging from 100 to 160 seconds.

The moulding cycle in this example follows the same steps as described in Example 1, using a mould featuring irregular patterns preheated to a temperature of 50C and 70°C.

### Example 10 - Manufacture of a plate (55-65% (w/w) PHBH and 35-45% (w/w) hydrated magnesium silicate)

The production of a plate uses 350-500 grams of pellets of a mixture that may vary between 55-65% (w/w) PHBH and 35-45% (w/w) hydrated magnesium silicate, with a duration ranging from 100 to 160 seconds.

The moulding cycle in this example follows the same steps as described in Example 1, using a mould featuring irregular patterns preheated to a temperature of 50C and 70°C.

### DEFINITIONS

The term "tableware item" refers to any item that can be used on a table, including both small and large tableware items.

The term "weight/weight or w/wₘᵢₓₜᵤᵣₑ or w/w" refers to the weight of a compound in relation to the total weight of the mixture.

The term "durable" refers to tableware items that, after intensive use and prolonged daily washing in the HORECA sector, maintain their mechanical and thermal properties, including rigidity, impact resistance, dimensional stability, and structural integrity, without compromising their functionality or aesthetics.

As used throughout this patent application, the term "plurality" should be understood as a quantitative concept in which at least two irregular patterns are present, forming part of the present invention up to the limit of all possible combinations.

The subject matter described above is provided as an illustration of the present invention and should not be interpreted as limiting it. The terminology used to describe the preferred embodiments of the present invention should not restrict it to those embodiments.

Various preferred features of the present invention have been described above purely as examples. Modifications to the invention may be made in detail within the scope of the claims attached hereto.

## Claims

1. A biodegradable tableware item **characterised in that** it comprises a mixture of 55% to 100% (w/w) of a polyhydroxyalkanoate and 0% to 45% *(w*/*w)* of a reinforcing agent, and at least one textured zone arranged on the surface of said item.

2. The biodegradable tableware item according to claim 1, **characterised in that** the mixture comprises:
a) 55% to 65% (w/w) of a polyhydroxyalkanoate and 35% to 45% *(w*/*w)* of a reinforcing agent; or
b) 65% to 75% (w/w) of a polyhydroxyalkanoate and 35% to 25% *(w*/*w)* of a reinforcing agent; or
c) 75% to 90% (w/w) of a polyhydroxyalkanoate and 10% to 25% (w/w) of a reinforcing agent.

3. The biodegradable tableware item according to any of the preceding claims, **characterised in that** the mixture comprises 80% to 85% (w/w) of a polyhydroxyalkanoate and 15% to 20% (w/w) of a reinforcing agent.

4. The biodegradable tableware item according to any of the preceding claims, **characterised in that** the polyhydroxyalkanoate is selected from polyhydroxybutyrate, polyhydroxybutyrate-co-hydroxyvalerate, polyhydroxybutyrate-co-hydroxyhexanoate, poly(3-hydroxybutyrate-co-4-hydroxybutyrate), polyhydroxyoctanoate, and mixtures thereof.

5. The biodegradable tableware item according to any of the preceding claims, **characterised in that** the reinforcing agent is selected from hydrated magnesium silicate, calcium carbonate, silica, aluminium hydroxide, nanoclays or mineral clays, and mineral fibres, and mixtures thereof.

6. The biodegradable tableware item according to any of the preceding claims, **characterised in that** the mixture comprises:
a) 80% (w/w) of polyhydroxybutyrate-co-hydroxyhexanoate and 20% (w/w) of hydrated magnesium silicate; or
b) 80% (w/w) of polyhydroxybutyrate-co-hydroxyvalerate and 20% (w/w) of hydrated magnesium silicate.

7. The biodegradable tableware item according to any of the preceding claims, **characterised in that** it comprises a mixture of:
a) 75% (w/w) of polyhydroxybutyrate-co-hydroxyhexanoate and 25% (w/w) of hydrated magnesium silicate; or
b) 75% (w/w) of polyhydroxybutyrate-co-hydroxyvalerate and 25% (w/w) of hydrated magnesium silicate.

8. The biodegradable tableware item according to any of the preceding claims, **characterised in that** the textured zone is represented by a plurality of irregular patterns imprinted on at least one area of the surface of the tableware item.

9. The biodegradable tableware item according to claim 8, **characterised in that** the textured zone is located in an area of the tableware item such as the outer surface, inner surface, upper surface, lower surface, handle, grip, concave sections, blade, etc.

10. The biodegradable tableware item according to claims 8 and 9, **characterised in that** the textured zone is distributed across the entire surface of the tableware item.

11. The biodegradable tableware item according to any of the preceding claims, **characterised in that** it is one of the following: dessert plate, cup, cutlery, bowl, tea cup, coffee cup, flat plate, deep plate, salad bowl, frappe cup, serving dish, sauce boat, teapot, mug, liquid container, etc.

12. Method for producing the biodegradable tableware item as defined in claims 1 to 11, **characterised by** comprising the following steps:
a) introducing the material to be melted into a mixer of an injection moulding machine and heating it to a temperature of 130°C to 180°C;
b) rotating the mixer at a speed of 30 to 60 rpm for the time necessary to homogenise the mixture;
c) injecting the molten material into a mould featuring irregular patterns on its inner surface, previously heated to a temperature of 50°C to 70°C, at an initial pressure of 120 to 140 bar;
d) reducing the pressure to 20 to 40 bar;
e) cooling the tableware item within the mould and subsequently ejecting it.

13. Method according to claim 12, **characterised in that** the material to be melted is:
a mixture comprising 55% to 100% (w/w) of a polyhydroxyalkanoate and 0% to 45% (w/w) of a reinforcing agent.

14. Method according to claims 12-13, **characterised by** additionally comprising a polishing step of the tableware item.

15. Method according to claims 12-14, **characterised in that** the heating temperature of the polyhydroxyalkanoate and reinforcing agent mixture in the mixer is 143°C.
